# FASCICULE DE BREVET EUROPEEN

(11) **EP 2 047 066 B1**
(45) Date de publication et mention de la délivrance du brevet: **22.06.2011**
(21) Numéro de dépôt: 07825100.6
(22) Date de dépôt: 20.09.2007
(51) Int. Cl.: F01D 1/02, F02C 3/045, F01D 1/12

(54) **MOTEUR A TURBINE A GAZ**
GASTURBINENMOTOR
GAS TURBINE ENGINE

(30) Priorité: 27.07.2006 FR 0606869
(43) Date de publication de la demande: 15.04.2009
(73) Titulaire: Fauconnier, Bruno, 85670 Palluau (FR)
(72) Inventeur: Fauconnier, Bruno, 85670 Palluau (FR)
(86) Numéro de dépôt international: PCT/IB2007/002636
(87) Numéro de publication internationale: WO 2008/029269

(56) Documents cités:
- DE-A1- 3 436 340
- DE-C- 889 243
- FR-A- 1 010 935
- GB-A- 791 917
- US-A- 1 240 366
- US-A- 2 286 940
- US-A- 2 532 831
- US-A- 2 537 344
- US-A- 3 685 287
- US-A- 3 751 908
- US-A- 4 757 682
- US-B1- 6 212 874

## Description

La présente invention vise une turbine à gaz et plus particulièrement, une turbine du genre dans lesquelles la combustion des gaz vient agir sur une roue à aubes.

US 3751908 décrit l'art antérieur.

Les roues à aubes actuelles n'ont pas d'admission d'air radial. Dans les turbopropulseurs et turboréacteurs la turbine est soumise à la flamme de la chambre de combustion en permanence, ce qui pose des problèmes de refroidissements et de coût de fabrication de celle-ci. Contrairement, les moteurs thermiques à quatre temps, dont les pistons peuvent être en alliage d'aluminium, sont lourds, de plus ils ont beaucoup de pièces en mouvement et un potentiel médiocre. La présente invention est définie dans les revendications adjointes.

La turbine selon l'invention permet de remédier au problème de refroidissement des aubes de turbines, car elles subissent les quatre temps moteur admission, compression, combustion, échappement, et d'avoir moins de pièces en mouvement. Elle est plus légère, plus simple, avec un potentiel plus important qu'un moteur à quatre temps.

Elle comporte un orifice d'admission d'air puis un compresseur - turbine à flux radial. Le compresseur-turbine n'est qu'un seul élément . Il compresse et alimente en air la chambre de combustion. La chambre de combustion est directement en aval de la turbine, ce même compresseur-turbine transforme une partie de l'énergie des gaz de combustion en énergie mécanique d'où une double fonctionnalité.

Les aubes du compresseur-turbine sont entièrement pleines à partir des pieds de celles-ci et sur toutes leurs surfaces.

Des cloisons déflecteurs sont montées radialement. Elles sont installées à l'entrée et à la sortie du compresseur turbine pour séparer la partie froide de la partie chaude des différentes chambres, augmenter la compression, modifier les pressions statique et dynamique. Les cloisons déflecteurs occupent la largeur de deux aubes du coté des compresseurs turbines pour assurer l'étanchéité entre les différentes chambres.

Les cloisons déflecteurs peuvent être monoblocs, ou séparées.

Selon des modes particuliers de réalisation, plusieurs compresseurs-turbines à flux radial peuvent être mis en série et couplés avec des diamètres différents et un nombre d'aubes qui peut varier pour adapter les puissances et rendements optimums.

Pour fabriquer des turbines plus puissantes, on augmentera les diamètres des compresseurs turbines et/ou leurs longueurs.

Un réducteur devra être installé si l'on met une hélice ou un fan.

Les dessins annexés illustrent l'invention :

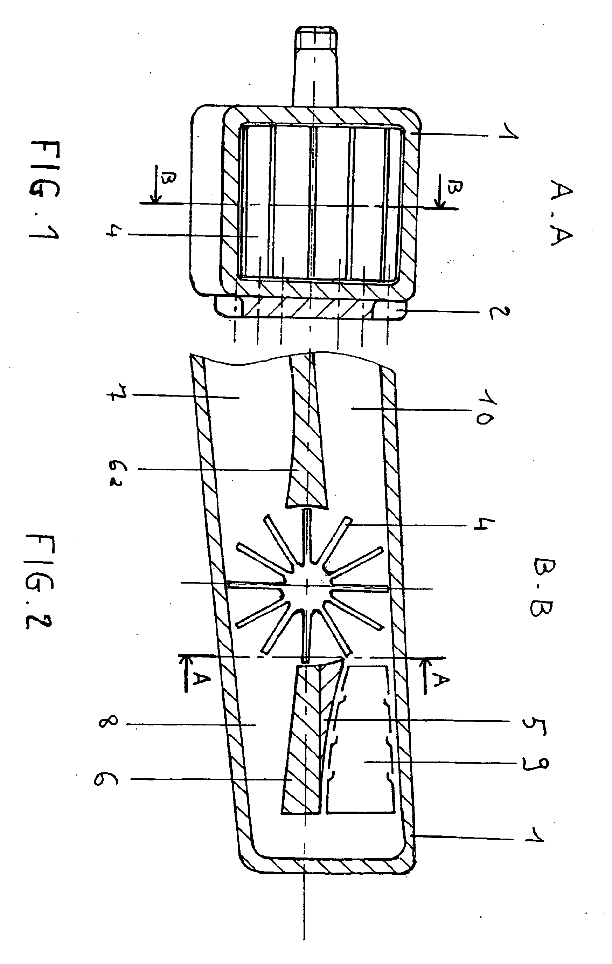

La figure 1 et 2 représente en coupe, le dispositif de l'invention.
La figure 3 et 4 représente en coupe, une variante de ce dispositif.

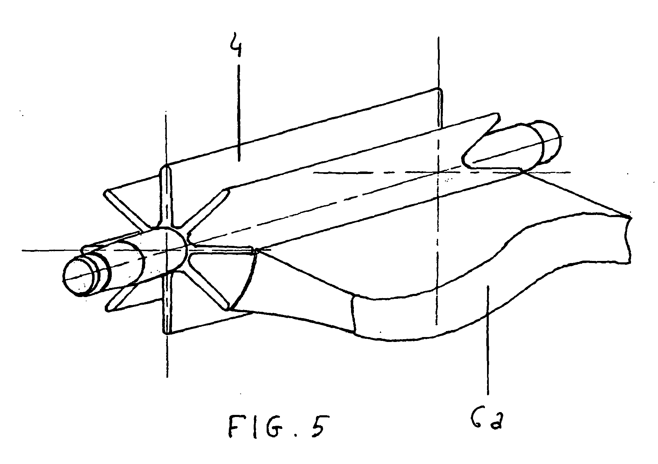

La figure 5 représente un compresseur turbine à flux radial en perspective avec une cloison déflecteur monobloc.

En référence à ces dessins, le dispositif comporte un carter (1). L'air arrive par une admission radiale d'air radiale (7), puis est compressé par le compresseur-turbine à flux radial(4) dans sa partie inférieure et dans la chambre radiale de compression (8). L'air compressé passe ensuite dans la chambre radiale de combustion (9). Les gaz qui en ressortent sont transformés en énergie mécanique dans la partie supérieure du compresseur-turbine à flux radial (4) puis évacués dans l'échappement radial (10).

Les pièces (5-6-6a) sont des cloisons-déflecteurs qui servent à séparer le flux froid du flux chaud des différentes chambres, augmenter la compression, modifier les pressions statiques et dynamiques et assurer l'étanchéité entre les différentes chambres.

Les pièces (6 et 6a) peuvent ne former qu'une seule et même pièce avec le carter (1).

La pièce (2) est un flasque facilitant le montage et la maintenance et l'interchangeabilité du compresseur-turbine.

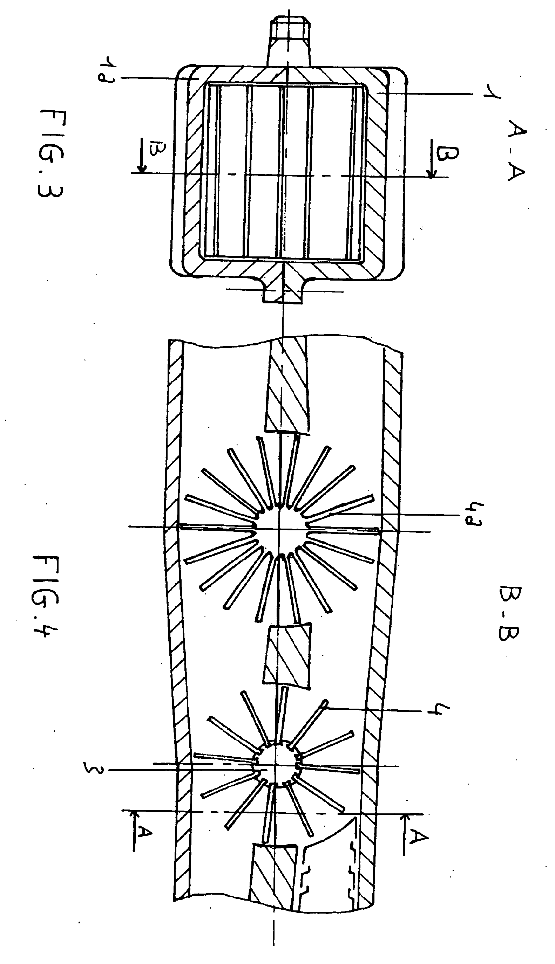

Dans la forme de réalisation selon la figure 4, il y a deux compresseurs-turbines à flux radial (4 et 4a) en série avec un nombre d'aubes et de diamètres différents.

Il y a aussi trois cloisons-déflecteurs monoblocs.

Les aubes du compresseur-turbine à flux radial (4) sont rapportées sur l'arbre (3).

Le carter est composé de deux demi-coquilles (1 et 1a).

La figure (5) en perspective représente un compresseur turbine à flux radial (4) avec un déflecteur (6a).

Selon une variante non illustrée, le compresseur turbine à flux radial (4 et 4a) peut-être en forme de boule ou ovoïde.

Les aubes du compresseur-turbine peuvent aussi être montées sur un arbre cannelé.

La turbine à flux radial selon l'invention est particulièrement destinée à l'aviation de tourisme et d'affaire et de transport dans des versions turbopropulseurs. Elle peut aussi équiper des hélicoptères.

En version réacteur, elle peut équiper l'aviation d'affaire.

## Revendications

1. Ensemble d'une turbine à gaz à flux radial qui comporte un carter dans lequel on trouve une admission radiale d'air (7) un compresseur-turbine à flux radial (4) qui est d'une seule pièce une chambre radiale de compression (8) puis une chambre radiale de combustion (9) superposée à la chambre de compression (8), la chambre de combustion donnant directement sur la partie turbine de ce même compresseur-turbine (4) puis l'échappement radial superposé à l'admission radiale d'air **caractérisé en ce que** le compresseur-turbine a des aubes pleines à partir des pieds de celles-ci et sur toutes leur surfaces

2. Ensemble selon la revendication 1 **caractérisé en ce que** le compresseur-turbine à flux radial (4) à la particularité , d'avoir la double fonctionnalité du compresseur et de la turbine dont toutes les aubes subissent les quatre temps moteur, admission, compression, combustion, échappement.

3. Ensemble selon la revendication 1 **caractérisé en ce que** l'on met plusieurs compresseurs-turbines à flux radial (4) en série.

4. Ensemble selon la revendication 1 ou la revendication 3 **caractérisé en ce que** le compresseur turbine à flux radial (4) a des cloisons-déflecteurs montées radialement (5,6,6a) qui servent à séparer le flux froid du flux chaud des différentes chambres, augmenter la compression et modifier les pressions statique et dynamique.

5. Ensemble selon la revendication 4 **caractérisé en ce que** les cloisons-déflecteurs occupent la largeur de deux aubes du coté des compresseurs turbines pour assurer l'étanchéité entre les différentes chambres.

## Claims

1. A radial flow gaz turbine device with a housing containing a radial air inlet (7), a one-piece radial flow compressor-turbine (4) a radial compression chamber (8) and a radial combustion chamber (9) which is fitted on to the compression chamber (8), this radial combustion chamber directly supplies the turbine part of the compressor-turbine (4), the radial exhaust is fitted on to the radial air inlet. It **characterised by** the fact that the compressor-turbine has blades which are full from the roots to their periphery.

2. A device according to claim 1 **characterised by** the radial flow compressor-turbine (4) having the distinctive double functionality of being both a compressor and a turbine in which all of the blades are turned by the four-stroke engine (inlet, compression combustion and exhaust).

3. A device according to claim 1 **characterised by** the use of several radial flow compressor-turbines (4) in series.

4. A device according to claim 1 or claim 3 **characterised by** the radial flow compressor-turbine (4) having radially assembled bulkead deflectors (5,6,6a) which separate the cool air flow from the hot air flow in the different chambers, increase the compression and change the static and dinamic pressure.

5. A device according to claim 4 **characterised by** the bulkhead deflectors taking up the width of the tow blades next to the turbine compressors to ensure airtightness between the different chambers.

## Patentansprüche

1. Einheit aus einer radialfluss-gasturbine, die ein gehäuse mit einem radialen lufteinlass umfasst, (7) eine einteilige radiafluss-verdichterturbine (4), eine radiale verdichtungskammer (8) eine radiale verbrennungskammner,(9) die die verdichtunqskammer überlagern (8), wobei die radial verbrennungskammer direkt zum turbinenteil der verdichterturbine führt, (4) sowie einen radialen luftauslass, der den radialen lufteinlass überlagert, **dadurch** charakterisiert, dass die verdichterturbine durchgehende schaufeln ab den füssen dieser und auf allen oberflächen hat.

2. Einheit gemäss forderung 1, die sich **dadurch** auszeichnet, dass die radialfluss-verdichterturbine (4) die besonderheit besitzt, dass sie sowohl als kompressor als acch als Turbine fungiert, deren schaufeln alle vier motorphasen durchlaufen: einlass, verdichtung, verbrennung, auslass.

3. Einheit gemäß forderung 1, die sich **dadurch** auszeichnet:, dass mehrere radialfluss-verdichterturbinen (4) miteinander verbunden werden.

4. Einheit gemäss forderung 1 oder forderung 3, die sich **dadurch** auszeichnet, dass die radialfluss-verdichterturbine (4) radial montierte ablenkwände besitzt (5, 6, 6a) um die kalten von den warmen strömungen aus den verschiedenen kammern zu trennen und die verdichung und den statischen und dynamischen druck zu erhöhen.

5. Einheit gemäss forderung 4, die sich **dadurch** auszeichnet, dass die ablenkwände genauso bereit sind wie die beiden schaufeln an der seite der verdichterturbinen, um die dichte wischen den verschiedenen kammern zu gewährleisten.
